# EUROPÄISCHE PATENTANMELDUNG

(11) **EP 1 780 110 A1**
(43) Veröffentlichungstag der Anmeldung: **02.05.2007**
(21) Anmeldenummer: 06019743.1
(22) Anmeldetag: 21.09.2006
(51) Int. Cl.: B62K 25/28

(54) **Hinterradaufhängung für Motorräder**

(30) Priorität: 26.10.2005 DE 102005051213
(71) Anmelder: Bayerische Motoren Werke Aktiengesellschaft, 80809 München (DE)
(72) Erfinder: Theobald, Markus, 85764 München (DE)

(57) **Zusammenfassung**

Hinterradaufhängung für Motorräder, mit
• einer Hinterradschwinge,
• einer Antriebswelle, die mittels einer Lagereinrichtung drehbar in der Hinterradschwinge gelagert ist,
• einem drehfest auf der Antriebswelle angeordneten Ruckdämpfergehäuse, in dem in einer Umfangsrichtung des Ruckdämpfergehäuses verteilt mehrere elastische Dämpfungselemente angeordnet sind,
• einem Radträger, der drehbar auf der Antriebswelle angeordnet ist und der zwischen die elastischen Dämpfungselemente eingreift, so dass der Radträger in gewissem Umfang entsprechend der Elastizität der Dämpfungselemente relativ zur Antriebswelle schwenkbar ist, und
• einem Hinterrad, das eine Nabe aufweist, welche an den Radträger angeschraubt ist.

## Beschreibung

Die vorliegende Erfindung betrifft ein Motorrad gemäß den Merkmalen des Patentanspruches 1.

Bei Motorrädern, die mit einer "zweiarmigen" Hinterradschwinge ausgerüstet sind, ist das Hinterrad üblicherweise mittels einer "Steckachse" gelagert. Zur Demontage des Hinterrads muss eine Mutter der Steckachse gelöst werden. Anschließend kann die Steckachse seitlich aus der Radnabe und der Hinterradschwinge herausgezogen werden. Wenn die Kette abgenommen ist, kann das Hinterrad nach hinten aus der Hinterradschwinge herausgezogen werden.

Bei vielen Motorrädern der Marke BMW, die mit einer Einarmschwinge ausgerüstet sind, ist das Hinterrad mit mehreren Schrauben von der Seite her mit seinem Nabenflansch an einen Hinterradträgerflansch angeschraubt. Beim Ausbau des Hinterrads müssen, ähnlich wie bei einem Auto, lediglich die von der Seite her eingeschraubten Schrauben gelöst werden. Anschließend kann das Hinterrad vom Hinterradträgerflansch seitlich abgenommen werden.

Motorräder mit Einarmschwinge, Kettenantrieb und Scheibenbremse am Hinterrad weisen eine relativ breite Hinterradaufhängung auf. Insbesondere bei Geländemotorrädern ist jedoch eine möglichst schmale Hinterradaufhängung von Vorteil.

Aufgabe der Erfindung ist es, eine Hinterradaufhängung für Motorräder zu schaffen, die insbesondere für Einarmschwingen geeignet ist und die eine kompakte und vor allem schmale Bauweise aufweist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ein Motorrad mit einer Hinterradaufhängung gemäß der Erfindung weist eine Hinterradschwinge, insbesondere eine Einarmschwinge auf, in der bzw. an der mittels einer Lagereinrichtung eine Antriebswelle gelagert ist. Auf der Antriebswelle wiederum ist ein Radträger drehbar angeordnet, an den die Nabe eines Hinterrades des Motorrads angeschraubt ist. In Drehmomentflussrichtung gesehen "zwischen" der Antriebswelle und dem Radträger ist eine "Ruckdämpfereinrichtung" angeordnet, die in gewissem Umfang Schwenkbewegungen des Radträgers bzw. des daran angeschraubten Hinterrades relativ zur Antriebswelle ermöglicht, so dass Drehmomentstöße, die z. B. beim schnellen Einkuppeln auftreten, gedämpft werden. Die Ruckdämpfereinrichtung weist ein Ruckdämpfergehäuse auf, das drehfest auf der Antriebswelle angeordnet bzw. drehfest mit der Antriebswelle verbunden ist. Es sei ausdrücklich darauf hingewiesen, dass das Ruckdämpfergehäuse und die Antriebswelle auch einteilig bzw. einstückig sein können und z.B. aus Stahl oder Aluminium hergestellt sein können. In dem Ruckdämpfergehäuse sind in Umfangsrichtung der Antriebswelle verteilt mehrere elastische Dämpfungselemente angeordnet. Bei den elastischen Dämpfungselementen kann es sich beispielsweise um kreisringsegmentartige Elastomerblöcke handeln. Der drehbar auf der Antriebswelle angeordnete Radträger weist Drehmomentübertragungsrippen oder ähnliche Drehmomentübertragungselemente auf, die zwischen die elastischen Dämpfungselemente eingreifen. Im Betrieb auftretende Drehmomentstöße werden durch Verformung der elastischen Dämpfungselemente gedämpft.

Das Hinterrad kann mit seiner Nabe unmittelbar seitlich an den Radträger angeschraubt sein. Vorzugsweise weist der Radträger einen radial abstehenden Radträgerflansch auf, an den die Nabe des Hinterrads mittels mehrerer sich parallel zu einer Axialrichtung der Antriebswelle erstreckender Schrauben seitlich angeschraubt ist.

Die Lagereinrichtung, mittels der die Antriebswelle drehbar in bzw. an der Hinterradschwinge gelagert ist, sitzt auf der Antriebswelle und ist mittels einer auf die Antriebswelle aufgeschraubten Spannmutter in Axialrichtung festgelegt. Bei der Lagereinrichtung kann es sich beispielsweise um ein doppelreihiges Schrägkugellager, ein doppelreihiges Kegelrollenlager oder um andersartige Wälzlager handeln. Prinzipiell wäre auch ein Gleitlager denkbar. Im Falle eines Wälzlagers spannt die Spannmutter den bzw. die Lagerinnenringe gegen einen Wellenabsatz der Abtriebswelle.

Eine weitere Funktion des Wellenabsatzes besteht in der axialen Festlegung des Radträgers. Der Radträger ist nämlich von der der Lagereinrichtung gegenüberliegenden Seite der Antriebswelle her auf die Antriebswelle aufgeschoben und ist in Richtung zur Lagereinrichtung hin durch den Wellenabsatz in Axialrichtung festgelegt. In der entgegen gesetzten Axialrichtung ist der Radträger durch einen radialen Absatz einer Schraube festgelegt, die in die Antriebswelle eingeschraubt ist. Der Radträger hat zwischen dem Wellenabsatz der Antriebswelle und dem "radialen Schraubenabsatz" ein geringes axiales Spiel, wodurch sichergestellt ist, dass der Radträger in Bezug auf die Antriebswelle entsprechend der Elastizität der Ruckdämpfereinrichtung geringfügig verschwenkbar ist. Der Radträger kann auch mit einer leichten Vorspannung montiert sein, die aufgrund der im Betrieb auftretenden Kräfte "unter Last" zu einem geringfügigen Spiel wird.

Die Schraube, mittels der der Radträger von der einen Seite her auf der Antriebswelle festgelegt ist, ist in ein an einer Innenseite der Antriebswelle vorgesehenes Innengewinde eingeschraubt. Bei der Antriebswelle handelt es sich also vorzugsweise um eine Hohlwelle. Der bereits erwähnte Schraubenabsatz ist in Axialrichtung gegen eine Stirnseite der Antriebswelle verspannt und steht in Radialrichtung über die Antriebswelle vor.

Vorzugsweise weist die Schraube, die zur axialen Festlegung des Radträgers auf der Antriebswelle vorgesehen ist, eine zentrale, durchgehende Ausnehmung auf.

Nach einer Weiterbildung der Erfindung ist an einem Ende der Antriebswelle ein Kettenblattträger angeordnet, der über eine Verzahnung, bei der es sich beispielsweise um eine Keilverzahnung oder eine Evolventenverzahnung handeln kann, drehfest mit der Antriebswelle verbunden.

Auf der dem Kettenblattträger gegenüberliegenden Seite der Antriebswelle kann ein Bremssattelhalter angeordnet sein, der mit einer an den Radträger angeschraubten Bremsscheibe zusammenwirkt. Der Bremssattelhalter wiederum ist im wesentlichen fest in Bezug auf die Hinterradschwinge angeordnet und ist über ein Lager auf einem "Trägerelement" gelagert, das drehfest mit der Antriebswelle verbunden ist. Die Antriebswelle kann sich somit relativ zu dem Bremssattelhalter drehen.

Eine sehr kompakte Bauweise wird unter anderem dadurch erreicht, dass eine Zentralschraube vorgesehen ist, die sich in Axialrichtung durch die Antriebswelle hindurch erstreckt und die das Trägerelement bzw. das Lager auf dem der Bremssattel gelagert ist und den Kettenblattträger, der auf der gegenüberliegenden Seite der Antriebswelle angeordnet ist, zusammengespannt. Durch Lösen der Zentralschraube kann auf der einen Seite der Kettenblattträger von der Antriebswelle abgezogen und auf der anderen Seite der Bremssattel gelöst werden.

Nach einer Weiterbildung der Erfindung weist die Hinterradnabe auf jeder ihrer beiden Seiten einen Nabenflansch auf, so dass das Hinterrad wahlweise mit dem einen Nabenflansch oder mit dem dem einen Nabenflansch gegenüberliegenden anderen Nabenflansch an den Radträgerflansch angeschraubt werden kann. Im Unterschied zu herkömmlichen Motorrädern ist es bei dem Motorrad gemäß der Erfindung möglich, bei einseitig abgefahrenem Hinterradreifen das Hinterrad auszubauen, um 180° zu drehen und dann wieder einzubauen. Da das Hinterrad seitlich an den Hinterradträgerflansch angeschraubt ist, kann dies innerhalb weniger Minuten erledigt werden und zwar ohne dass eine Reifenwerkstatt aufgesucht werden muss.

Im folgenden wird die Erfindung im Zusammenhang mit der Zeichnung näher erläutert.
- Figur 1: zeigt einen Axialschnitt durch eine Hinterradaufhängung,gemäß der Erfindung;
- Figur 2: zeigt eine perspektivische Darstellung der Hinterradaufhängung der Figur 1 von der Seite des Kettenblatt aus gesehen; und
- Figur 3: zeigt eine perspektivische Darstellung der Hinterradaufhängungen der Figuren 1 und 2 von der Seite der Bremsscheibe aus gesehen.

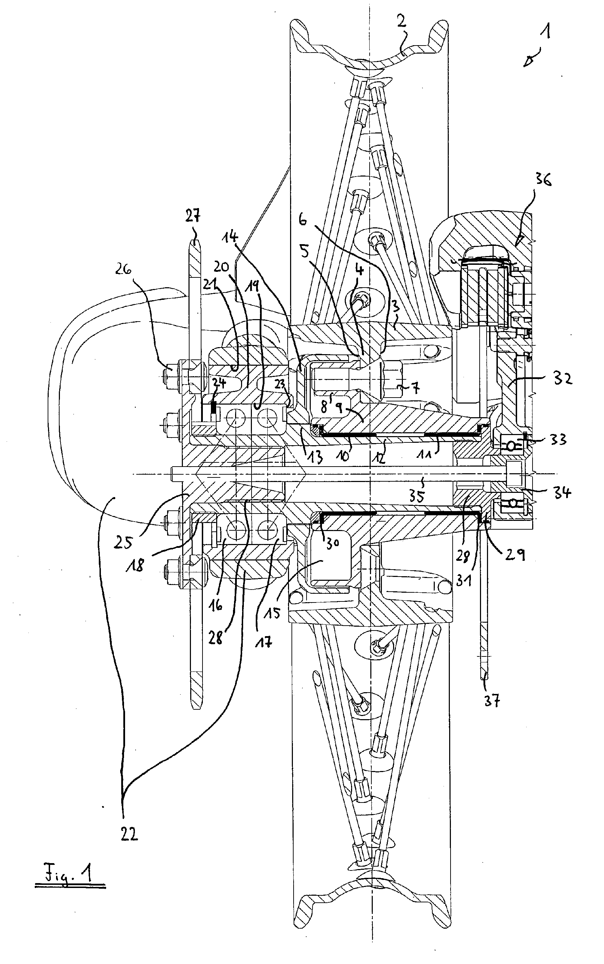

Figur 1 zeigt eine Hinterradaufhängung 1 eines Motorrads mit einer Speichenfelge 2, welche eine Nabe 3 aufweist. Die Nabe 3 wiederum weist einen Mittelsteg 4 auf, dessen beide Stirnseiten als linker bzw. rechter Nabenflansch 5, 6 fungieren. In dem Mittelsteg 4 sind in Umfangsrichtung verteilt eine gerade Anzahl von Durchgangsbohrungen vorgesehen. Die Hälfte der Durchgangsbohrungen ist von der Seite des linken Nabenflansches 5 und die andere Hälfte der Durchgangsbohrungen von der Seite des rechten Nabenflanschs 6 her angefast. Dadurch ist es möglich, dass Hinterrad wahlweise in der einen Laufrichtung oder in der entgegen gesetzten Laufrichtung zu montieren.

Bei der in Figur 1 gezeigten Montagelage liegt der linke Nabenflansch 5 der Nabe 3 an einem Radträger 9 an und die Nabe 3 ist mittels mehrerer Radschrauben, von denen hier lediglich eine Radschraube 7 dargestellt ist, von der Seite des rechten Nabenflanschs her an einen Radträgerflansch 8 eines Radträgers 9 angeschraubt. Der Radträger 9 ist mittels zweier Gleitlager 10, 11 auf einer Antriebswelle 12, die als Hohlwelle ausgebildet ist, gelagert. Bei den Gleitlagern 10 kann es sich um einfache Kunststoffgleitlager handeln. Die Antriebswelle 12 weist einen Wellenabsatz 13 auf, auf dem ein Ruckdämpfergehäuse 14 angeordnet ist. Das Ruckdämpfergehäuse 14 ist drehfest mit der Antriebswelle 12 verbunden. Das Ruckdämpfergehäuse 14 kann beispielsweise auf den Wellenabsatz 13 aufgeschrumpft oder durch eine Reibschweißverbindung mit der Antriebswelle 12 verbunden sein.

Von dem Radträger 9 stehen in Axialrichtung mehrere in Umfangsrichtung verteilt angeordnete Drehmomentübertragsrippen oder ähnliche Drehmomentübertragungselemente (nicht dargestellt) ab, die wiederum zwischen Drehmomentübertragungsrippen oder ähnlichen Drehmomentübertragungsmittel (nicht dargestellt) angeordnet sind, die seitlich von dem Ruckdämpfergehäuse 14 abstehen. Von der Antriebswelle 12 kann also Drehmoment über das Ruckdämpfergehäuse 14 auf die Dämpfungselemente 15, bei denen es sich um einfache kreisringsegmentartige Elastomerblöcke handeln kann übertragen. Von den Dämpfungselementen 15 wiederum wird das Drehmoment über die Drehmomentübertragungsrippen (nicht dargestellt) des Radträgers 9 auf den Radträger 9 über den Radträgerflansch 8 auf das Hinterrad übertragen. Aufgrund der Elastizität der Dämpfungselemente 15 werden Drehmomentstöße gedämpft.

Auf der Antriebswelle 12 sitzt ein doppelreihiges Schrägkugellager 16, 17. Die Innenringe des Schrägkugellagers 16, 17 sind durch eine Wellenmutter 18 gegen den Wellenabsatz 13 gespannt und sind dadurch eindeutig auf der Antriebswelle 12 festgelegt. Die Außenringe der Schrägkugellager 16, 17 sind in eine kreiszylindrische Ausnehmung 19 eines Exzenterelementes 20 eingesetzt. Das Exzenterelement 20 weist einen kreiszylindrischen Außenumfang auf, der in eine kreiszylindrische Ausnehmung 21 einer Hinterradschwinge 22 eingesetzt ist. Die beiden kreiszylindrischen Ausnehmungen 19, 21 sind exzentrisch zueinander. Durch Verdrehen des Exzenterelementes 20 in der Hinterradschwinge 21 kann die Position des Hinterrads und somit die Kettenspannung feinjustiert werden. Die Außenringe der Schrägkugellager 16, 17 sind auf der einen Seite durch einen Absatz des Exzenterelementes 20 und auf der Außenseite durch einen Sicherungsring 24 in Axialrichtung festgelegt.

Von dem linken Ende der Antriebswelle 12 her ist in die Antriebswelle 12 ein Kettenradträger 25 eingesetzt, an den über mehrere Schrauben 26 ein Kettenrad 27 angeschraubt ist. Der Kettenradträger 25 ist über eine Verzahnung 28, bei der sich z. B. um eine Keilverzahnung oder eine Evolventenverzahnung handeln kann, drehfest mit der Antriebswelle 12 verbunden.

Vom Motor des Motorrads (hier nicht näher dargestellt) wird Drehmoment über eine Kette (nicht dargestellt) auf das Kettenrad 27 und vom Kettenrad 27 über den Kettenradträger 25 auf die Antriebswelle 12 und von dort über den Radträger 9 auf das Hinterrad übertragen.

Auf der dem Kettenrad 27 gegenüberliegenden Seite ist eine Schraube 28 in ein Innengewinde der Antriebswelle 12 eingeschraubt. Die Schraube 28 weist einen Schraubenabsatz 29 auf, der in Axialrichtung an der Stirnseite der Antriebswelle 12 anliegt und der in Radialrichtung über den Außenumfang der Antriebswelle 12 hervorsteht. Der Schraubenabsatz 29 dient dazu, den Radträger 9 in Axialrichtung festzulegen. Wie bereits erwähnt ist der Radträger 9 in Radialrichtung über die Gleitlager 10, 11 schwenkbar auf der Antriebswelle 12 gelagert. In Axialrichtung ist der Radträger 9 durch radial abstehende Endabschnitte 30, 31 der Gleitlager 10, 11 gelagert. Der Abstand zwischen dem Wellenabsatz 13 und der Stirnseite der Antriebswelle 12 bzw. dem Schraubenabsatz 29 ist so ausgelegt, dass der Radträger 9 ein geringes axiales Spiel hat, so dass eine ungehinderte Schwenkbewegung des Radträgers 9 auf der Antriebswelle 12 ermöglicht wird.

Ferner ist ein Bremssattelhalter 32 vorgesehen, der über ein Kugellager 33 auf einem Trägerelement 34 sitzt. Über eine Zentralschraube 35, die sich durch die Antriebswelle 12 hindurch erstreckt und deren Ende in den Kettenradträger 25 eingeschraubt ist, werden der Kettenradträger 25 und das Trägerelement 34 sowie der darauf angeordnete Bremssattelträger 32 zusammengespannt.

Der Bremssattelträger 32 trägt einen Bremssattel 36, der mit einer an den Radträger 9 angeschraubten Bremsscheibe 37 zusammenwirkt.

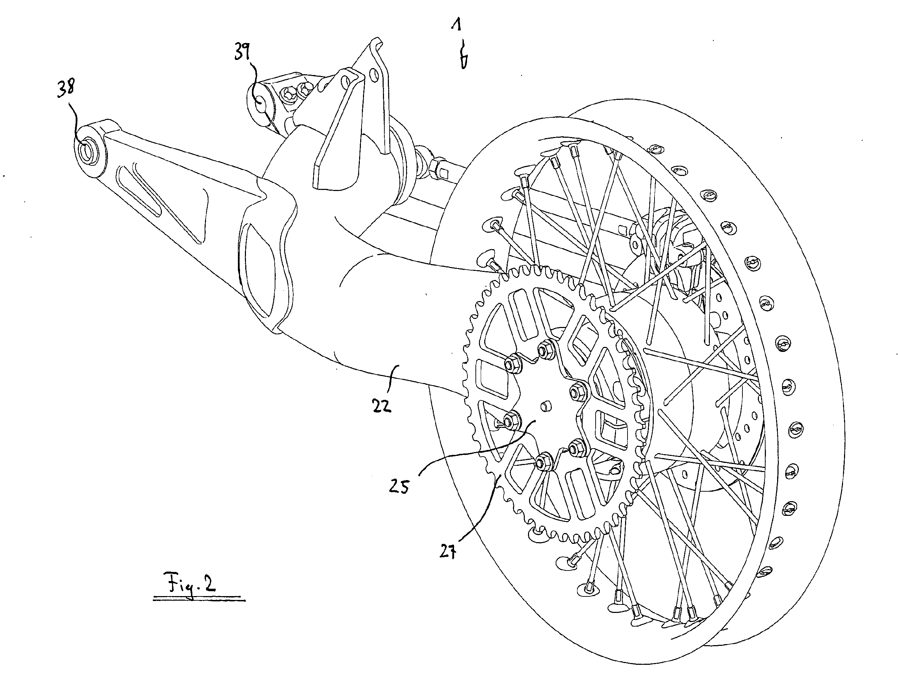

Figur 2 zeigt die Hinterradaufhängung 1 in perspektivischer Darstellung und zwar von schräg hinten von der Seite des Kettenrads 27 aus gesehen. Deutlich zu erkennen ist, dass es sich bei der Hinterradschwinge 22 um eine Einarmschwinge handelt, die über Schwingenlager 38, 39 an einem hier nicht näher dargestellten Motorradrahmen, einem Getriebe oder einem Motorradmotorgehäuse gelagert ist.

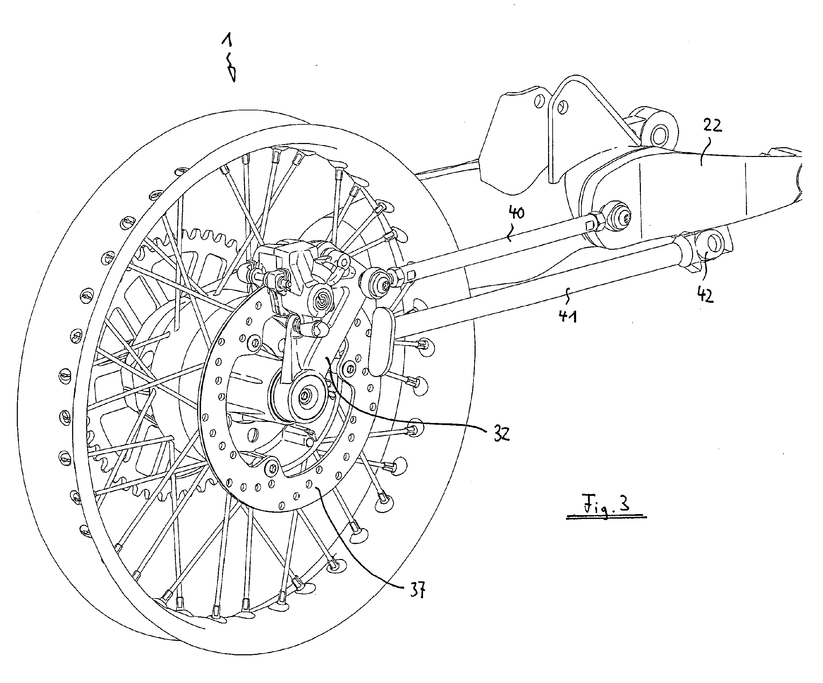

Figur 3 zeigt die Hinterradaufhängung 1 in perspektivischer Darstellung von schräg hinten und zwar von der Seite, auf der die Bremsscheibe 37 angeordnet ist. Deutlich zu erkennen ist der Bremssattelträger 32, der über eine Abstützstange 40 am vorderen Teil der Hinterradschwinge 22 abgestützt ist. Vollständigkeitshalber sei noch eine ausklappbare Seitenstütze 41 erwähnt, die über ein Gelenk 42 an der Hinterradschwinge 22 befestigt ist.

## Patentansprüche

1. Hinterradaufhängung für Motorräder, mit
• einer Hinterradschwinge (22),
• einer Antriebswelle (12), die mittels einer Lagereinrichtung (16, 17) drehbar in bzw. an der Hinterradschwinge (22) gelagert ist,
• einem drehfest auf der Antriebswelle (12) angeordneten Ruckdämpfergehäuse (14), in dem in einer Umfangsrichtung des Ruckdämpfergehäuses (14) verteilt mehrere elastische Dämpfungselemente (15) angeordnet sind,
• einem Radträger (9), der drehbar auf der Antriebswelle (12) angeordnet ist und der zwischen die elastischen Dämpfungselemente (15) eingreift, so dass der Radträger in gewissem Umfang entsprechend der Elastizität der Dämpfungselemente (15) relativ zur Antriebswelle (12) schwenkbar ist, und
• einem Hinterrad, das eine Nabe (3) aufweist, welche an den Radträger (9) angeschraubt ist.

2. Hinterradaufhängung (1) nach Anspruch 1, **dadurch gekennzeichnet, dass** die Hinterradschwinge (22) eine Einarmschwinge ist.

3. Hinterradaufhängung (1) nach einem der Ansprüche 1 oder 2, **dadurch gekennzeichnet, dass** der Radträger (9) einen radial abstehenden Radträgerflansch (8) aufweist und dass die Nabe (3) mittels mehrerer sich parallel zu einer Axialrichtung der Antriebswelle (12) erstreckender Schrauben (7) seitlich an den Radträgerflansch (8) angeschraubt ist.

4. Hinterradaufhängung (1) nach einem der vorangehenden Ansprüche, **dadurch gekennzeichnet, dass** die Lagereinrichtung (16, 17) auf der Antriebswelle (12) sitzt und mittels einer auf die Antriebswelle (12) aufgeschraubten Spannmutter (18) in Axialrichtung festgelegt ist.

5. Hinterradaufhängung (1) nach einem der vorangehenden Ansprüche, **dadurch gekennzeichnet, dass** die Lagereinrichtung (16, 17) mittels der Spannmutter (18) in Axialrichtung gegen einen Wellenabsatz (13) der Antriebswelle (12) gespannt ist.

6. Hinterradaufhängung (1) nach einem der vorangehenden Ansprüche, **dadurch gekennzeichnet, dass** der Radträger (9) in Axialrichtung auf einer Seite durch den Wellenabsatz (13) der Antriebswelle (12) und auf der anderen Seite durch einen radialen Absatz (29) einer Schraube (28) festgelegt ist, wobei der Radträger (9) ein geringfügiges Axialspiel aufweist, so dass eine Schwenkbewegung des Radträgers (9) in Bezug auf die Antriebswelle (12) ermöglicht wird.

7. Hinterradaufhängung (1) nach einem der vorangehenden Ansprüche, **dadurch gekennzeichnet, dass** die Antriebswelle (12) eine Hohlwelle ist.

8. Hinterradaufhängung (1) nach einem der vorangehenden Ansprüche, **dadurch gekennzeichnet, dass** die Schraube (28) in ein an einer Innenseite der Antriebswelle (12) vorgesehenes Innengewinde eingeschraubt ist, wobei der Schraubenabsatz (29) in Axialrichtung gegen eine Stirnseite der Antriebswelle (12) verspannt ist und in Radialrichtung über einen Außenumfang der Antriebswelle (12) vorsteht und **dadurch** den Radträger (9) in Axialrichtung festlegt.

9. Hinterradaufhängung (1) nach einem der vorangehenden Ansprüche, **dadurch gekennzeichnet, dass** die Schraube (28) eine zentrale, durchgehende Ausnehmung aufweist.

10. Hinterradaufhängung (1) nach einem der vorangehenden Ansprüche, **dadurch gekennzeichnet, dass** der Radträger (9) mittels Gleitlager (10, 11) auf der Antriebswelle (12) gelagert ist.

11. Hinterradaufhängung (1) nach einem der vorangehenden Ansprüche, **dadurch gekennzeichnet, dass** an einem Ende der Antriebswelle (12) ein Kettenblattträger (25) angeordnet ist, der über eine Verzahnung (28) drehfest mit der Antriebswelle (12) verbunden ist.

12. Hinterradaufhängung (1) nach einem der vorangehenden Ansprüche, **dadurch gekennzeichnet, dass** auf der dem Kettenblattträger (25) gegenüberliegenden Seite der Antriebswelle (12) ein Bremssattelhalter (32) angeordnet ist.

13. Hinterradaufhängung (1) nach einem der vorangehenden Ansprüche, **dadurch gekennzeichnet, dass** der Bremssattelhalter (32) über ein Lager (33) auf einem Trägerelement (34) gelagert ist, das drehfest mit der Antriebswelle (12) verbunden ist.

14. Hinterradaufhängung (1) nach einem der vorangehenden Ansprüche, **dadurch gekennzeichnet, dass** eine Zentralschraube (35) vorgesehen ist, die sich in Axialrichtung durch die Antriebswelle (12) hindurch erstreckt, wobei das Lager (33), auf dem der Bremssattel (32) gelagert ist, und der Kettenblattträger (25) durch die Zentralschraube (35) in Axialrichtung zusammengespannt sind.

15. Hinterradaufhängung (1) nach einem der vorangehenden Ansprüche, **dadurch gekennzeichnet, dass** die Nabe (3) auf jeder ihrer beiden Seiten einen Nabenflansch (5, 6) aufweist, so dass das Hinterrad wahlweise mit dem einen Nabenflansch (5) oder mit dem dem einen Nabenflansch (5) gegenüberliegenden anderen Nabenflansch (6) an den Radträgerflansch (8) angeschraubt werden kann.

16. Hinterradaufhängung (1) nach einem der vorangehenden Ansprüche, **dadurch gekennzeichnet, dass** die Antriebswelle (12) aus Stahl und das darauf angeordnete Ruckdämpfergehäuse (14) zumindest teilweise aus Aluminium besteht.

17. Hinterradaufhängung (1) nach Anspruch 16, **dadurch gekennzeichnet, dass** das Ruckdämpfergehäuse (14) auf die Antriebswelle (12) aufgeschrumpft ist.

18. Hinterradaufhängung (1) nach einem der vorangehenden Ansprüche, **dadurch gekennzeichnet, dass** das Ruckdämpfergehäuse (14) durch eine Reibschweißverbindung mit der Antriebswelle (12) verbunden ist.

19. Hinterradaufhängung (1) nach einem der vorangehenden Ansprüche, **dadurch gekennzeichnet, dass** die Lagereinrichtung (16, 17) in eine in einem Exzenterelement (20) vorgesehene kreiszylindrische Ausnehmung (19) eingesetzt ist und dass das Exzenterelement (20) in eine in der Hinterradschwinge (22) vorgesehene kreiszylindrische Ausnehmung (21) eingesetzt ist, wobei Mittelachsen der beiden kreiszylindrischen Ausnehmungen (19, 21) exzentrisch zueinander sind.
